(19) **Europäisches Patentamt**
**European Patent Office**
**Office européen des brevets**

(11) **EP 3 217 416 B1**

(12) **EUROPEAN PATENT SPECIFICATION**

(45) Date of publication and mention
of the grant of the patent:
**18.09.2024  Bulletin 2024/38**

(21) Application number: **15856459.1**

(22) Date of filing: **17.09.2015**

(51) International Patent Classification (IPC):
**H01H 33/662** *(2006.01)*     **H01H 33/59** *(2006.01)*
**H02B 13/035** *(2006.01)*

(52) Cooperative Patent Classification (CPC):
**H01H 33/59; H01H 33/662;** H01H 33/596;
H02B 13/0354; H02B 13/0358

(86) International application number:
**PCT/JP2015/076502**

(87) International publication number:
**WO 2016/072161 (12.05.2016 Gazette 2016/19)**

(54) **VACUUM CIRCUIT BREAKER AND DIRECT CURRENT CIRCUIT BREAKER**

VAKUUMSCHUTZSCHALTER UND GLEICHSTROMSCHUTZSCHALTER

DISJONCTEUR DE DÉPRESSION ET DISJONCTEUR À COURANT CONTINU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.11.2014   JP 2014226817**

(43) Date of publication of application:
**13.09.2017   Bulletin 2017/37**

(73) Proprietor: **Mitsubishi Electric Corporation
Chiyoda-ku
Tokyo 100-8310 (JP)**

(72) Inventors:
 • **YOSHIMURA, Manabu**
   **Tokyo 100-8310 (JP)**
 • **HORINOUCHI, Katsuhiko**
   **Tokyo 100-8310 (JP)**
 • **ABE, Junichi**
   **Tokyo 100-8310 (JP)**

 • **KAINAGA, Soichiro**
   **Tokyo 100-8310 (JP)**
 • **KAWANO, Ryoko**
   **Tokyo 100-8310 (JP)**

(74) Representative: **Meissner Bolte Partnerschaft
mbB
Patentanwälte Rechtsanwälte
Postfach 86 06 24
81633 München (DE)**

(56) References cited:
| | |
|---|---|
| EP-A- 2 573 887 | WO-A1-2013/127462 |
| JP-A- 2010 178 526 | JP-A- 2010 178 526 |
| JP-A- S5 991 619 | JP-A- S54 132 776 |
| JP-A- S55 126 923 | JP-A- S62 252 024 |
| JP-U- S 627 738 | JP-U- S5 693 933 |
| US-A1- 2012 160 810 | US-A1- 2013 213 937 |

EP 3 217 416 B1

**Description**

TECHNICAL FIELD

The present invention relates to a direct current circuit breaker in a direct current power system used for flowing and cutting off a load current in normal states, and for cutting off a short circuit current and a ground fault current at the time of an accident to protect equipment on a load side, and relates to a vacuum circuit breaker applied to the direct current circuit breaker.

BACKGROUND ART

In a power system, when an excessive current flows due to an accident caused by a lightning strike or the like, a prompt cutoff of the fault current in the system is necessary for protecting equipment on a load side. For that purpose, circuit breakers are installed in a main system of the power system. In an alternating current power system, the current can be cut off at the timing when the current value is zero (also referred to as a current zero) at every half cycle of the current. However, because a direct current power system has no current zero, the current zero needs to be created forcibly.

A direct current circuit breaker to forcibly create a current zero in a direct current power system is known that, for example, includes a vacuum circuit breaker, a disconnector connected in series to the vacuum circuit breaker, and a semiconductor switch connected in parallel to a series circuit of the vacuum circuit breaker and the disconnector.

A direct current circuit breaker with such a configuration, in normal states, flows a normal current in the vacuum circuit breaker and the disconnector, and at the time of an accident, forcibly creates the current zero to the current flowing in the vacuum circuit breaker to cut off the current in the vacuum circuit breaker, commutate the current to the semiconductor switch, and finally cut off the fault current with the semiconductor switch.

In a direct current circuit breaker as described above, because the disconnector secures insulation between electrodes, low withstand voltage performance of the vacuum circuit breaker has no problem in the cutoff operation, but insulation to the earth needs to be maintained between the vacuum circuit breaker and the ground.

A general vacuum circuit breaker includes a cylindrical grounded enclosure inside of which a vacuum valve provided with a movable side electrode and a stationary side electrode is arranged, and the enclosure is filled with an insulating gas such as sulfur hexafluoride gas (SF6 gas) and hermetically sealed.

A vacuum valve used in such a vacuum circuit breaker includes a contact unit to bring a contact of the movable side electrode and a contact of the stationary side electrode into contact, and a cylindrical vacuum enclosure containing these in a vacuum. Because the insulation to the earth between the vacuum valve and the grounded enclosure is greatly affected by an electric field on an outer surface of the vacuum enclosure, a method of relaxing the electric field on the outer surface of the vacuum valve is required.

As a method of relaxing the electric field of the vacuum valve, a method of lowering electric field strength on an outer surface of a vacuum valve by molding the vacuum valve with an epoxy resin or the like is disclosed (for example, refer to Patent Document 1). Also, a vacuum valve provided with a metal cylinder outside a vacuum enclosure, not for the purpose of electric field relaxation, is disclosed (for example, refer to Patent Document 2).

Patent Document 3 relates to a tank type vacuum breaker. Partition spacers of an insulation body are provided between a pressure tank and current transformer tanks. The space in which the dry air of insulation gas is sealed up is separated in air tight manner into a first space within the pressure tank and a second space within bushings and the current transformer tanks. The creepage length on the side of first space of the partition spacers is set longer than the creepage length on the second space side, and the gas pressure in the first space is set lower than that in the second space.

Patent Documents 4-7 relate to further disclosures considered relevant for discussion of the background art of the present invention.

Prior Art Documents

Patent Documents

Patent Document 1: Japanese Unexamined Patent Application Publication JP 2001-357 761 A (page 3, FIG. 1)
Patent Document 2: Japanese Unexamined Patent Application Publication JP 2009-129 855 A (page 4, FIG. 1)
Patent Document 3: JP 2010 178526 A
Patent Document 4: US 2013/213937 A1
Patent Document 5: EP 2 573 887 A1
Patent Document 6: US 2012/160810 A1
Patent Document 7: JP S62 252024 A
Patent Document 8: WO2013/127462 A1

SUMMARY OF THE INVENTION

Technical Problem

With a conventional method of lowering electric field strength on an outer surface of a vacuum valve by molding a vacuum enclosure with an epoxy resin or the like, the electric field on the outer surface of the vacuum enclosure is relaxed. Unfortunately, the use of a mold resin deteriorates resistance performance to partial discharge originating from, for example, void defects remaining in the mold resin, and delamination and cracks due to secular change.

In a conventional vacuum valve provided with a metal cylinder outside a vacuum enclosure, the vacuum valve improves cutoff performance by using the metal cylinder that allows a current to flow in a direction opposite to a current flowing from a movable side electrode to a stationary side electrode. Unfortunately, due to a main circuit current flowing through the metal cylinder, an electric field concentrates at a connection terminal of the movable side electrode, a connection terminal of the stationary side electrode, or a connection terminal of the metal cylinder; thus electric field relaxation effect cannot be obtained.

In addition, the metal cylinder needs to withstand forces caused by the main circuit current flowing through the metal cylinder and acting between the metal cylinder and each of the movable side electrode and the stationary side electrode. This unfortunately requires an increase in the wall thickness of the metal cylinder or the size of the metal cylinder, leading to an increase in the size and the weight of the vacuum valve.

The invention is made to solve above-described problems, and aims to obtain a vacuum circuit breaker provided with a compact vacuum valve that prevents deterioration of partial discharge resistant performance and has high electric field relaxation performance on an outer surface.

## Solution to the Problem

According to the invention, the problem is solved by the subject-matter outlined in the independent claims. Advantageous further developments of the invention are set forth in the dependent claims.

## Advantageous Effects of the Invention

In the invention, at least one of a stationary side shield electrically connected to the stationary side conductor and a movable side shield electrically connected to the movable side conductor is provided; this prevents deterioration of partial discharge resistant performance of the vacuum valve, enabling downsizing thereof and high electric field relaxation performance on an outer surface.

## BRIEF DESCRIPTION OF THE DRAWINGS

FIG. 1 is a configuration diagram of a direct current circuit breaker according to Embodiment 1, useful for understanding the invention only.
FIG. 2 is a cross sectional view of a vacuum circuit breaker according to Embodiment 1, useful for understanding the invention only.
FIG. 3 is a characteristic diagram showing a relationship between a sealed enclosure and a central cylinder according to Embodiment 1, useful for understanding the invention only.
FIG. 4 is a cross sectional view of a vacuum circuit breaking unit according to Embodiment 1, useful for understanding the invention only.
FIG. 5 is a cross sectional view of a vacuum circuit breaking unit according to Embodiment 2, an embodiment of the claimed invention.
FIG. 6 is a cross sectional view of an end portion of a stationary side shield according to Embodiment 3, an embodiment of the claimed invention.
FIG. 7 is a cross sectional view of a vacuum circuit breaking unit according to Embodiment 4, useful for understanding the invention only.
FIG. 8 is a cross sectional view of a vacuum circuit breaking unit according to Embodiment 5, an embodiment of the claimed invention.

## DESCRIPTION OF EMBODIMENTS

### Embodiment 1

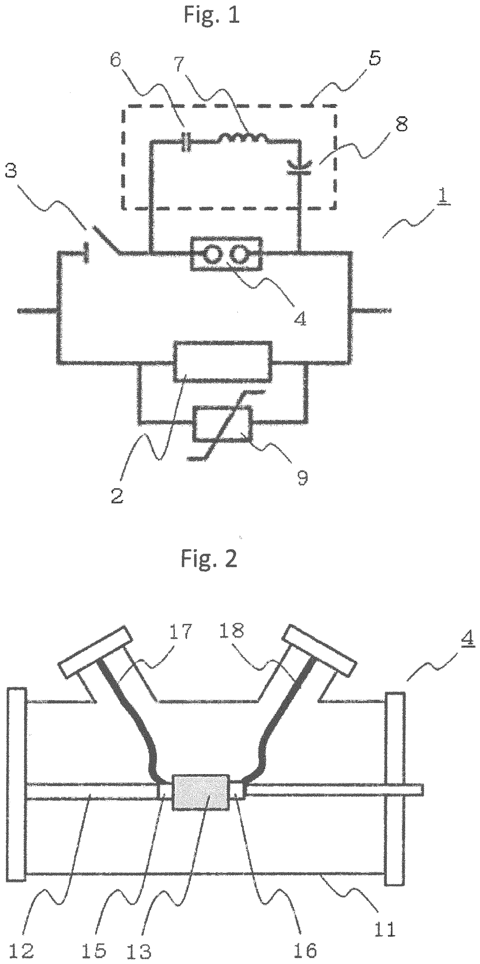

FIG. 1 is a configuration diagram of a direct current circuit breaker according to Embodiment 1 useful for understanding the invention only. The direct current circuit breaker 1 according to the embodiment includes a semiconductor switch 2 provided in a main circuit of a direct current transmission system, and a series connection of a mechanical disconnector 3 and a vacuum circuit breaker 4, which are connected in parallel to the semiconductor switch 2.

A forced commutation circuit 5 is connected in parallel to the vacuum circuit breaker 4. The forced commutation circuit 5 includes a charged capacitor 6, a reactor 7, and a closing switch 8, which are connected in series. As in the embodiment, a lightning arrester 9 may be connected in parallel to the semiconductor switch 2 for absorbing energy of the main circuit after a cutoff of a direct current in the main circuit.

The semiconductor switch 2 includes a semiconductor device such as an IGBT (Insulated Gate Bipolar Transistor) and a GTO (Gate Turn-Off Thyristor). Generally, the semiconductor switch 2 includes multiple semiconductor switches connected in series.

A disconnector 3 includes an enclosure that is provided therein with metal contacts and filled with an insulating gas such as SF6, dry air, nitrogen, argon, and carbon dioxide, and the contacts are opened and closed by an operation device for mechanically implementing opening/closing operation. The disconnector 3 has insulation capability of withstanding the voltage applied to the entire direct current circuit breaker 1 when a distance between the contacts exceeds a certain distance.

The vacuum circuit breaker 4 includes an enclosure that is provided therein with a vacuum valve and filled with an above described insulating gas, and contacts of the vacuum valve is opened and closed for cutting off a current. FIG. 2 is a sectional view of the vacuum circuit breaker 4 used in the embodiment. As shown in FIG. 2, the vacuum circuit breaker 4 has, inside a sealed enclosure 11 of a cylindrical structure, a supporting insulator 12 holding a vacuum circuit breaking unit 13 including the vacuum valve.

The vacuum circuit breaking unit 13 has a function of flowing and cutting off the current by the vacuum valve. The vacuum valve is provided with a stationary side electrode and a movable side electrode, and the stationary side electrode and the movable side electrode are connected to a stationary side conductor 15 and a movable side conductor 16 respectively. There are provided in the vacuum valve a stationary side contact connected to an end of the stationary side electrode, and a movable side contact connected to an end of the movable side electrode.

The stationary side conductor 15 and the movable side conductor 16 are electrically connected to main circuit conductors 17 and 18 respectively, and the main circuit conductors 17 and 18 are led to the outside of the sealed enclosure 11. A potential of the sealed enclosure 11 is the ground potential.

An operation of the direct current circuit breaker 1 configured as above is explained below. The disconnector 3 and the vacuum circuit breaker 4 are closed while the current flows steadily. The semiconductor switch 2 may be in a closed state (ON state) or in an open state (OFF state). When an accident occurs, an opening command is given to the direct current circuit breaker 1 from the outside. Upon receiving the opening command, the direct current circuit breaker 1 starts opening the vacuum circuit breaker 4.

When the vacuum circuit breaker 4 opens (the vacuum valve opens), a vacuum arc ignites inside the vacuum valve. A voltage of the vacuum arc generated between the movable side contact and the stationary side contact is at most about several Volts because of a low resistance of the arc. Thus, with the semiconductor switch 2 including multiple semiconductor switches connected in series, only the arc generation by the opening may not make the vacuum arc voltage reach a threshold voltage (hereinafter, ON voltage) necessary for a current to flow through the multiple semiconductor switches.

In this case, the current cannot be commutated from the vacuum circuit breaker 4 to the semiconductor switch 2. However, as described below, the forced commutation circuit 5 makes a reverse current flow against the fault current of the main circuit in the vacuum circuit breaker 4 to form a current zero; this enables a cutoff and commutation of the current to the semiconductor switch 2.

When a distance between the contacts of the vacuum valve in the vacuum circuit breaker 4 reaches a distance at which the current can be cut off, the closing switch 8 of the forced commutation circuit 5 is closed. The capacitor 6 is precharged with a polarity and a voltage for flowing a reverse current against the main circuit current, and when the closing switch 8 is closed, the reverse current flows from the capacitor 6 to the vacuum circuit breaker 4 via the reactor 7.

By superimposing the reverse current on the main circuit current, a current zero is generated in the vacuum circuit breaker 4. When the current zero is generated, the vacuum circuit breaker 4 cuts off the current flowing therein. The current cutoff increases the resistance value between the electrodes of the vacuum valve to infinity, and makes the voltage of the vacuum arc much larger than the ON voltage of the semiconductor switch; thus, the current can be commutated to the semiconductor switch 2.

In this way, the main circuit current is commutated to the semiconductor switch 2. In order to enable this commutation, regarding the withstand voltage between the contacts of the vacuum valve of the vacuum circuit breaker 4, it suffices that the contacts withstand a voltage exceeding the ON voltage (several hundred volts) of the semiconductor switch 2.

When the main circuit current is commutated to the semiconductor switch 2 and the current flowing through the disconnector 3 becomes zero, the disconnector 3 starts an opening operation. The semiconductor switch 2 opens when the distance between the contacts of the disconnector 3 reaches the distance that allows them to withstand the voltage that is applied from the system to the direct current circuit breaker 1 (the voltage applied to the entire direct current circuit breaker 1) when the semiconductor switch 2 opens to cut off the fault current. In this way, the cutoff operation of the direct current circuit breaker 1 is completed.

As described above, regarding the withstand voltage between the contacts of the vacuum valve of the vacuum circuit breaker 4, it suffices that the contacts withstand a voltage exceeding the ON voltage (several hundred volts) of the semiconductor switch 2; thus, as a vacuum valve, a small sized vacuum valve with a small voltage class and a short creeping distance in a direction between the contacts can be applied.

In a general vacuum circuit breaker, as shown in FIG. 2, the vacuum circuit breaking unit 13 is held by the supporting insulator 12 inside the sealed enclosure 11 with cylindrical structure, and the central axis of the sealed enclosure 11 and the central axis of the vacuum circuit breaking unit 13 are coaxial. Now, there is described a configuration of a cylindrical sealed enclosure inside of which arranged a central cylinder of a cylindrical structure being coaxial with and smaller in diameter than the sealed enclosure.

Assume that a radius of the sealed enclosure is $R$, a radius of the central cylinder is $r$, a potential difference between the sealed enclosure and the central cylinder is $X$ (V), and electric field strength on an outer surface of the central cylinder is $Y$ (V / m), a relationship of following Equation (1) holds.

$$R = r \times exp(X/(r \times Y)) \qquad \ldots(1).$$

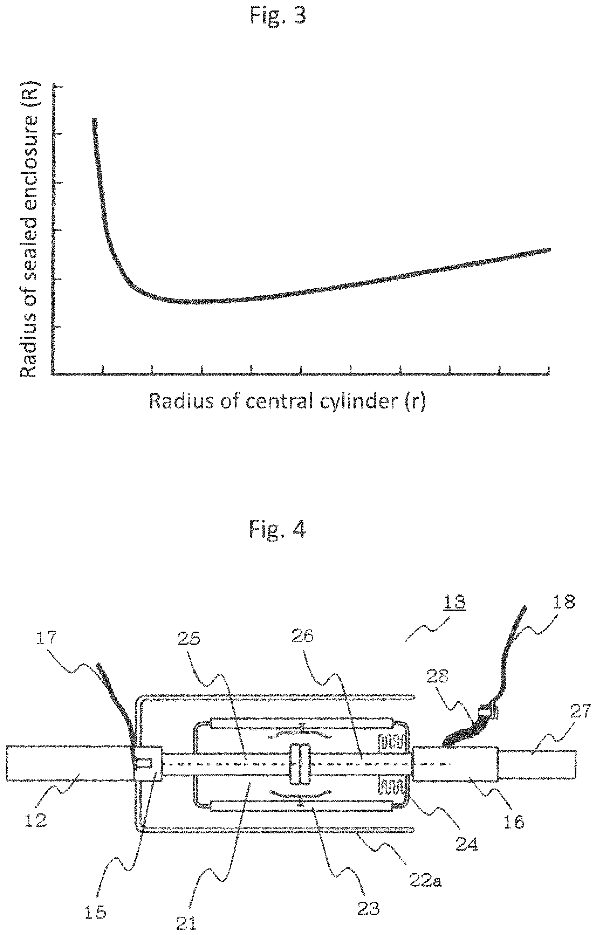

FIG. 3 is a characteristic diagram showing a relationship between *r* and *R* when *X* and *Y* are constant in Equation (1). As can be seen from the figure, when the potential difference between the sealed enclosure and the central cylinder and the electric field strength on the outer surface of the central cylinder are kept constant, there exists the radius of the central cylinder that minimizes the radius of the sealed enclosure.

From the above relationship, if the system voltage (*X* in Equation (1)) is set and the electric field strength (*Y* in Equation (1)) on the outer surface of the vacuum circuit breaking unit determined from a viewpoint of safety or the like is determined, the minimum radius (*R* in Equation (1)) of the sealed enclosure 11 and the radius (r in Equation (1)) of the vacuum circuit breaking unit corresponding to the minimum radius of the sealed enclosure can be determined.

As described above, the vacuum valve is provided with the stationary side electrode and the movable side electrode. In order to electrically insulate the stationary side electrode from the movable side electrode, the vacuum enclosure of the vacuum valve is an insulating cylindrical enclosure. Thus, the vacuum valve has joint surfaces between the insulating cylindrical enclosure and each of the stationary side electrode and the movable side electrode.

Because the joint surfaces are where the electric field concentrates, the electric field strength on the outer surface of the vacuum valve is not uniform. Thus, in a case where an exposed vacuum valve is installed as the vacuum circuit breaking unit, even if a vacuum valve with a radius determined by Equation (1) is used, in practice, the electric field strength at the joint surfaces between the insulating cylindrical enclosure and each of the stationary side electrode and the movable side electrode is higher than the assumed electric field strength (here, *Y*). Then, securing the safety of insulation to the ground (insulation between the sealed enclosure and the vacuum valve) requires larger radius of the sealed enclosure.

FIG. 4 is a sectional view of the vacuum circuit breaking unit according to the embodiment. As shown in FIG. 4, the vacuum circuit breaking unit 13 according to the embodiment is provided with a vacuum valve 21 and a conductive stationary side shield 22a covering the vacuum valve 21. Preferably, the stationary side shield 22a has a cylindrical structure coaxial with the vacuum valve 21. A metal such as aluminum and iron can be used for a material of the stationary side shield 22a.

The vacuum valve 21 includes a vacuum enclosure constituted by a vacuum insulated enclosure 23 and a vacuum shieling metal fitting 24, and is provided therein with a stationary side contact connected to an end portion of a stationary side electrode 25 and a movable side contact connected to an end portion of a movable side electrode 26. The stationary side electrode 25 is electrically connected to the stationary side conductor 15, and connected to the main circuit conductor 17 via the stationary side conductor 15.

The stationary side conductor 15 is connected to the supporting insulator 12, and the vacuum circuit breaking unit 13 is fixed inside the sealed enclosure 11 by the supporting insulator 12. The movable side electrode 26 is electrically connected to the movable side conductor 16, and connected to an insulated operation rod 27 via the movable side conductor 16. The movable side conductor 16 is connected to the main circuit conductor 18, which is different from the main circuit conductor 17, via a freely movable shunt 28.

The shunt 28 has a structure of laminated thin metal sheets and is capable of contraction and expansion. The stationary side shield 22a is a cylindrical structure covering the vacuum insulated enclosure 23, the vacuum shieling metal fitting 24, the stationary side electrode 25 and the movable side electrode 26, and is electrically connected to the stationary side conductor 15.

The radius of the cylindrical stationary side shield 22a is the radius (r) of the vacuum circuit breaking unit determined by Equation (1) on the basis of the electric field strength of the outer surface of the vacuum valve determined from a viewpoint of the system voltage, safety, or the like. Thus, the radius of the vacuum valve 21 installed inside the stationary side shield 22a is smaller than r.

In the vacuum valve configured as above, the stationary side shield 22a has the same uniform potential as the potential of the stationary side conductor 15 with no higher potential portion; this prevents deterioration of partial discharge resistant performance of the vacuum circuit breaking unit. Also, this requires no increase in the radius of the sealed enclosure, enabling a compact vacuum circuit breaker of high electric field relaxation performance on the outer surface.

Note that, the radius of the vacuum valve is smaller than the radius determined on the basis of the electric field strength on the outer surface of the vacuum valve determined from a viewpoint of the system voltage, safety, or the like; however, this is not a problem because, regarding the withstand voltage between the contacts of the vacuum valve, it suffices that the contacts withstand the voltage exceeding the ON voltage of the semiconductor switch of the direct current circuit breaker.

The stationary side shield 22a is electrically connected to the stationary side conductor, but it is not a path of a current flowing through the main circuit conductors 17 and 18. Thus, a force caused by the current flowing through the main circuit conductors does not act on the stationary side shield 22a. This requires no increase in the wall thickness or the size of the stationary side shield 22a.

The vacuum circuit breaker according to the embodiment is provided with the stationary side shield 22a electrically connected to the stationary side conductor 15; however, instead of the stationary side shield, the vacuum circuit breaker may be provided with a movable side shield that has the same shield shape as the stationary side shield and is electrically connected to the movable side conductor 16.

Embodiment 2

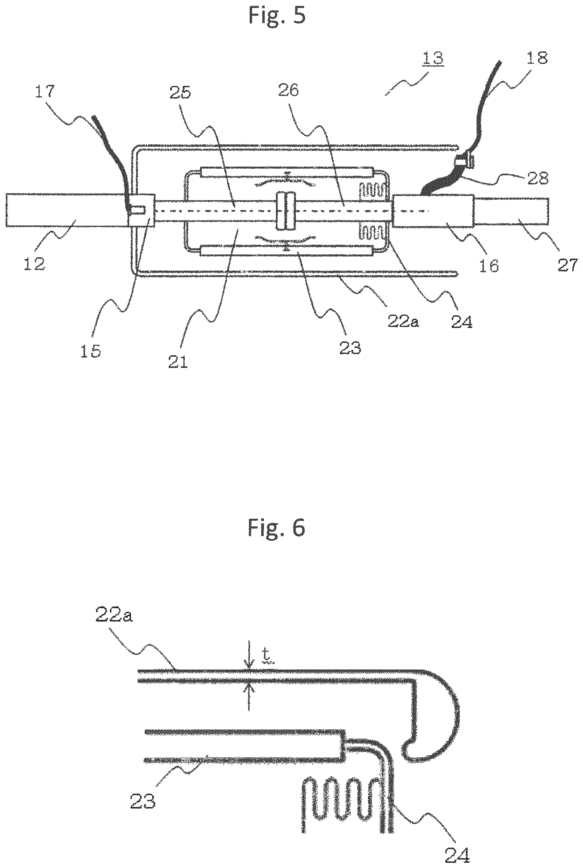

FIG. 5 is a sectional view of a vacuum circuit breaking unit according to Embodiment 2, an embodiment of the claimed invention. As shown in FIG. 5, a basic configuration of the vacuum circuit breaking unit according to the present embodiment is similar to that shown in FIG. 4 of Embodiment 1 except that the cylindrical stationary side shield 22a extends in its axial direction. The stationary side shield 22a according to the present embodiment has a structure covering an area up to the movable side conductor 16 and the shunt 28.

In the vacuum circuit breaking unit configured as above, the stationary side shield 22a has the same uniform potential as the potential of the stationary side conductor 15 with no higher potential portion; this prevents deterioration of partial discharge resistant performance of the vacuum circuit breaking unit. Also, this requires no increase in the radius of the sealed enclosure, enabling a compact vacuum circuit breaker of high electric field relaxation performance on the outer surface.

Because the shunt 28 has a structure of laminated thin metal sheets, sharp edges tend to be formed, and electric field concentration tends to occur at the edges. As in the embodiment, covering of the area up to the movable side conductor 16 and the shunt 28 by the stationary side shield 22a enables electric field relaxation at the shunt 28.

The extension of the stationary side shield 22a in its axial direction so as to cover the area up to the shunt 28 brings an end portion of the stationary side shield 22a close to the main circuit conductor 18; this raises concerns about insulation between the end portion of the stationary side shield 22a and the main circuit conductor 18. However, considering the potential difference between the stationary side shield 22a and the main circuit conductor 18, it suffices that a distance between the end portion of the stationary side shield 22a and the main circuit conductor 18 is an insulation distance to withstand the potential difference of several hundred volts at the time of a cutoff.

The vacuum circuit breaker according to the embodiment is provided with the stationary side shield 22a electrically connected to the stationary side conductor 15; however, instead of the stationary side shield, the vacuum circuit breaker may be provided with a movable side shield that has the same shield shape as the stationary side shield and is electrically connected to the movable side conductor 16. The movable side shield electrically connected to the movable side conductor 16 can be used if the movable side shield has a structure that covers the shunt 28 and also covers, with an extended length in the cylinder axis direction, the area up to the stationary side conductor 15.

Embodiment 3

FIG. 6 is a sectional view of an end portion of a stationary side shield of a vacuum circuit breaking unit according to Embodiment 3, an embodiment of the claimed invention. A basic structure of the vacuum circuit breaking unit according to the present embodiment is similar to those shown in Embodiment 1 and Embodiment 2.

As shown in FIG. 6, in the embodiment, when a thickness of a main portion of the stationary side shield 22a is $t$, a cross sectional shape of an end portion of the stationary side shield 22a is a hemispherical shape with a radius of curvature equal to or larger than one half of $t$.

Because an inner wall of a sealed enclosure with the ground potential is close to an upper side of the stationary side shield 22a, an electric field concentrates at the end portion of the stationary side shield 22a in FIG. 6. As in the embodiment, a cross sectional shape of an end portion of the stationary side shield 22a being a hemispherical shape with a radius of curvature equal to or larger than one half of $t$ enables suppression of electric field concentration at the end portion and provision of a vacuum circuit breaker with higher insulation reliability.

Note that, if the cross sectional shape of the end portion of the stationary side shield 22a is a hemispherical shape with a radius of curvature smaller than one half of $t$, the end portion has a sharper shape than the main portion of the stationary side shield 22a, resulting in no suppression of the electric field concentration.

Embodiment 4

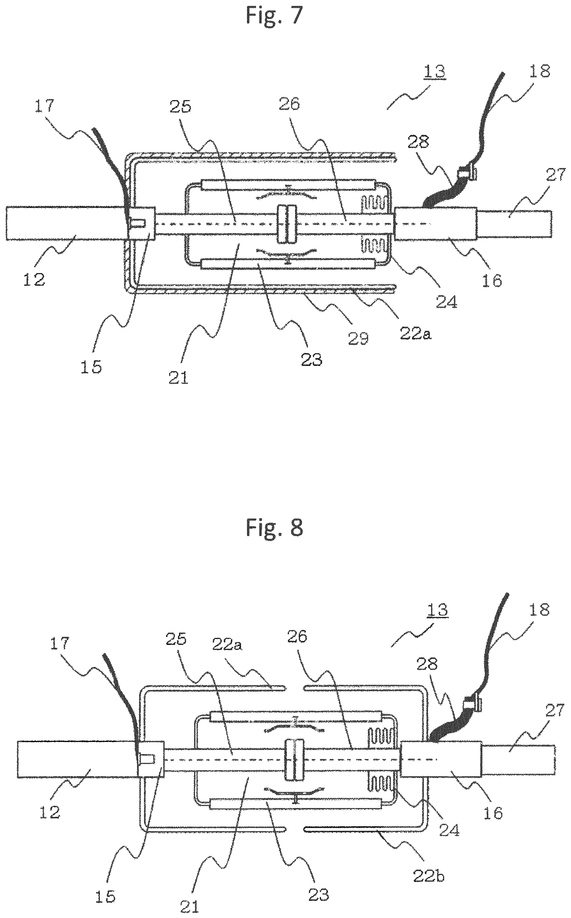

FIG. 7 is a sectional view of a vacuum circuit breaking unit according to Embodiment 4, an embodiment useful for understanding the invention only. As shown in FIG. 7, a basic configuration of the vacuum circuit breaking unit according to the present embodiment is similar to that shown in FIG. 4 of Embodiment 1 except that an outer surface of the cylindrical stationary side shield 22a is provided with an insulating coating 29.

The insulating coating 29 is made of resin such as epoxy resin and fluororesin. In this case, the thickness of the resin coating is preferably several tens of micrometers to several millimeters. In a case where aluminum is used as the material of the stationary side shield 22a, the aluminum may be anodized, that is, the aluminum surface may be alumite treated, to form the insulating coating 29 on the outer surface of the stationary side shield 22a.

In power equipment used at high voltage, as a general tendency, with an increase in the area or the volume of the electrode to which high electric field is applied, weak points where dielectric breakdown starts increase stochastically and breakdown field strength decreases. Such a characteristic is referred to as area effect of electrodes or volume effect of gas.

The vacuum circuit breaker according to the embodiment with the insulating coating formed on the outer surface of the stationary side shield 22a to which high voltage is applied enables suppression of the area effect of electrodes, improving withstand voltage performance by 10 to 15% as compared to a case without coating.

Embodiment 5

FIG. 8 is a sectional view of a vacuum circuit breaking unit according to Embodiment 5, an embodiment of the claimed invention. As shown in FIG. 8, a basic configuration of the vacuum circuit breaking unit according to the present embodiment is similar to that shown in FIG. 4 of Embodiment 1 except that the vacuum circuit breaking unit in the present embodiment is provided with both of a stationary side shield electrically connected to a stationary side conductor and a movable side shield connected to a movable side conductor.

In FIG. 8, a stationary side shield 22a connected to the stationary side conductor 15 is similar to the stationary side shield 22a shown in FIG. 4 of Embodiment 1. The vacuum circuit breaking unit in the present embodiment is further provided with a movable side shield 22b connected to the movable side conductor 16.

The stationary side shield 22a and the movable side shield 22b are cylindrical, and disposed with their respective openings facing each other. The shortest distance between the stationary side shield 22a and the movable side shield 22b positioned to face each other is set to such a distance at which no discharge occurs under a potential difference applied between the stationary side shield 22a and the movable side shield 22b when the vacuum valve is open.

Here, in an insulating gas environment inside the vacuum circuit breaker 4, an effective ionization coefficient is expressed by $\alpha - \eta$, where an electron impact ionization coefficient is $\alpha$ and an electron's electron attachment coefficient is $\eta$. It is generally understood that when the effective ionization coefficient is larger than zero, discharge is likely to occur. Thus, the shortest distance between the stationary side shield 22a and the movable side shield 22b positioned to face each other is set to such a distance at which the effective ionization coefficient is zero or less under a potential difference applied between the stationary side shield 22a and the movable side shield 22b when the vacuum valve is open.

In the vacuum circuit breaking unit configured as above, the stationary side shield 22a has the same uniform potential as the potential of the stationary side conductor 15 and the movable side shield 22b has the same uniform potential as the potential of the movable side conductor 16 with no higher potential portion; this prevents deterioration of partial discharge resistant performance of the vacuum circuit breaking unit. Also, this requires no increase in the radius of the sealed enclosure, enabling a compact vacuum circuit breaker of high electric field relaxation performance on the outer surface.

In the vacuum circuit breaker according to the embodiment, as shown in FIG. 8, the movable side shield 22b is directly connected to the movable side conductor 16. In this case, because the movable side shield 22b moves with the movable side conductor 16, a distance between the movable side shield and the stationary side shield 22a changes.

In order to keep the space between the stationary side shield 22a and the movable side shield 22b constant, the movable side shield 22b may be fixed by connecting the movable side shield 22b to the movable side conductor 16 with a contractible and expandable conductor such as the shunt 28. Such a configuration, in which the movable side shield 22b is stationary all the time, does not require the movable side shield 22b to have mechanical strength to withstand movement, enabling a simplified structure of the movable side shield 22b.

As described in Embodiment 2, the shunt 28 has a structure where an electric field tends to concentrate; however, in the present embodiment, the disposition of the movable side shield 22b with the same potential as that of the shunt 28 in the vicinity of the shunt 28 enables relaxation of the electric field concentrated on the shunt 28. The movable side shield 22b may have a structure covering the shunt 28. Such a structure enables significant relaxation of the electric field concentration on the shunt 28.

As described in Embodiment 3, it is preferable that when a thickness of a main portion of the stationary side shield 22a is $t1$, a cross sectional shape of an end portion of the stationary side shield 22a is a hemispherical shape with a radius of curvature equal to or more than one half of $t1$, and when a thickness of a main portion of the movable side shield 22b is $t2$, a cross sectional shape of an end portion of the movable side shield 22b is a hemispherical shape with a radius of curvature equal to or more than one half of $t2$. Such a configuration enables suppression of electric field concentration on the end portions of the stationary side shield and the movable side shield, and provision of a vacuum circuit breaker with higher insulation reliability.

Furthermore, as described in Embodiment 4, it is preferable to form insulating coatings on the outer surfaces of the cylindrical stationary side shield 22a and the cylindrical movable side shield 22b. Such a configuration with the insulating coatings formed on the outer surfaces of the stationary side shield 22a and movable side shield 22b to which high voltage is applied enables suppression of the area effect of electrodes, improving withstand voltage performance by 10 to 15 % as compared to a case without coating.

A structure described in Embodiment 1, in which a shield is disposed on either of the stationary side conductor and the movable side conductor, needs consideration of an insulation distance between an end portion of the shield and a main circuit conductor not connected to the shield. A structure as in the present embodiment, in which both of the stationary side conductor and the movable side conductor are provided with shields, needs only consideration of insulation of the shortest distance between the shields, and does not need much consideration of insulation performance of other portions. This enhances flexibility in design of the entire device and enables provision of a vacuum circuit breaker with higher insulation reliability.

Note that, the direct current circuit breaker shown in FIG. 1 and described in Embodiments 1 to 5 includes the semiconductor switch 2; however, the direct current circuit breaker with no semiconductor switch 2 can also employ vacuum circuit breakers in Embodiments 1 to 5. In this case, the potential difference generated between the stationary side conductor and the movable side conductor when the vacuum valve is open is not several hundred volts, but is sometimes about the system voltage (up to about several tens of thousands volts).

However, by setting a distance enabling insulation under the potential difference to the distance between the stationary side shield and the movable side conductor, the distance between the movable side shield and the stationary side conductor, or the distance between the stationary side shield and the movable side shield, the vacuum circuit breakers in Embodiments 1 to 5 can be applied.

Reference Numerals

| 1 | direct current circuit breaker |
|---|---|
| 2 | semiconductor switch |
| 3 | disconnector |
| 4 | vacuum circuit breaker |
| 5 | forced commutation circuit |
| 6 | capacitor |
| 7 | reactor |
| 8 | closing switch |
| 9 | lightning arrester |
| 11 | sealed enclosure |
| 12 | supporting insulator |
| 13 | vacuum circuit breaking unit |
| 15 | stationary side conductor |
| 16 | movable side conductor |
| 17 | main circuit conductor |
| 18 | main circuit conductor |
| 21 | vacuum valve |
| 22a | stationary side shield |
| 22b | movable side shield |
| 23 | vacuum insulated enclosure |
| 24 | vacuum shieling metal fitting |
| 25 | stationary side electrode |
| 26 | movable side electrode |
| 27 | insulated operation rod |
| 28 | shunt |
| 29 | coating |

**Claims**

1. A vacuum circuit breaker (4) comprising:

    - a vacuum valve (21);
    - one stationary side conductor (15) electrically connected to a stationary side electrode (25) of the vacuum valve (21) and one movable side conductor (16) electrically connected to a movable side electrode (26) of the vacuum valve (21);
    - one of a stationary side shield (22a) electrically connected to the stationary side conductor (15) and a movable side shield (22b) electrically connected to the movable side conductor (16);
    - a sealed enclosure (11) containing the vacuum valve (21), the stationary side conductor (15), the movable side conductor (16), and the one of the stationary side shield (22a) and the movable side shield (22b), and hermetically sealed with an inside thereof filled with an insulating gas; and
    - main circuit conductors (17, 18), one of which is electrically connected to the stationary side conductor (15) and another of which is electrically connected to the movable side conductor (16), and led to the outside of the sealed enclosure (11),

    the vacuum circuit breaker (4) **characterised in that**:

        - the stationary side shield (22a) covers a part of the movable side conductor (16); or

    the movable side shield (22b) covers a part of the stationary side conductor (15).

2. The vacuum circuit breaker (4) according to claim 1, wherein the stationary side shield (22a) and the movable side shield (22b) has a cylindrical structure coaxial with the vacuum valve (21).

3. The vacuum circuit breaker (4) according to claim 2, wherein a cross sectional shape of an end portion of the stationary side shield (22a) and the movable side shield (22b) has a shape with a radius of curvature equal to or larger than one half of a thickness of a corresponding main portion of the stationary side shield (22a) and the movable side shield (22b).

4. The vacuum circuit breaker (4) according to any one of claims 1 to 3, wherein an outer surface of the stationary side shield (22a) and the movable side shield (22b) is covered with an insulating coating (29).

**5.** A direct current circuit breaker (1) comprising:

- a semiconductor switch (2) provided in a main circuit of a direct current system;
- a disconnector (3) and a vacuum circuit breaker (4) connected in parallel to the semiconductor switch (2); and
- a forced commutation circuit (5) connected in parallel to the vacuum circuit breaker, wherein the vacuum circuit breaker (4) is the vacuum circuit breaker (4) according to any one of claims 1 to 4.

**Patentansprüche**

**1.** Vakuumschutzschalter (4), welcher Folgendes aufweist:

- einen Vakuumschalter (21);
- einen Leiter (15) auf der stationären Seite, der elektrisch mit einer Elektrode (25) auf der stationären Seite des Vakuumschalters (21) verbunden ist, und einen Leiter (16) auf der beweglichen Seite, der elektrisch mit einer Elektrode (26) auf der beweglichen Seite des Vakuumschalters (21) verbunden ist;
- eine von einer Abschirmung (22a) auf der stationären Seite, die elektrisch mit dem Leiter (15) auf der stationären Seite verbunden ist, und einer Abschirmung (22b) auf der beweglichen Seite, die elektrisch mit dem Leiter (16) auf der beweglichen Seite verbunden ist;
- ein abgedichtetes Gehäuse (11), das den Vakuumschalter (21), den Leiter (15) auf der stationären Seite, den Leiter (16) auf der beweglichen Seite und die eine von der Abschirmung (22a) auf der stationären Seite und der Abschirmung (22b) auf der beweglichen Seite enthält und luftdicht verschlossen ist, wobei sein Inneres mit einem Isoliergas gefüllt ist; und
- Hauptstromkreisleiter (17, 18), von denen der eine elektrisch mit dem Leiter (15) auf der stationären Seite und ein anderer elektrisch mit dem Leiter (16) auf der beweglichen Seite verbunden ist, und die zur Außenseite des abgedichteten Gehäuses (11) geführt sind,
wobei der Vakuumschutzschalter (4) **dadurch gekennzeichnet ist,**

- **dass** die Abschirmung (22a) auf der stationären Seite einen Teil des Leiters (16) auf der beweglichen Seite abdeckt; oder

die Abschirmung (22b) auf der beweglichen Seite einen Teil des Leiters (15) auf der stationären Seite abdeckt.

**2.** Vakuumschutzschalter (4) nach Anspruch 1, wobei die Abschirmung (22a) auf der stationären Seite und die Abschirmung (22b) auf der beweglichen Seite eine zylindrische Struktur koaxial zum Vakuumschalter (21) aufweisen.

**3.** Vakuumschutzschalter (4) nach Anspruch 2, wobei eine Querschnittsform eines Endbereichs der Abschirmung (22a) auf der stationären Seite (22a) und der Abschirmung (22b) auf der beweglichen Seite eine Form mit einem Krümmungsradius aufweist, der gleich oder größer ist als die Hälfte einer Dicke eines entsprechenden Hauptbereichs der Abschirmung (22a) auf der stationären Seite und der Abschirmung (22b) auf der beweglichen Seite.

**4.** Vakuumschutzschalter (4) nach einem der Ansprüche 1 bis 3, wobei eine Außenfläche der Abschirmung (22a) auf der stationären Seite und der Abschirmung (22b) auf der beweglichen Seite mit einer isolierenden Beschichtung (29) bedeckt ist.

**5.** Gleichstromschutzschalter (1), welcher Folgendes aufweist:

- einen Halbleiterschalter (2), der in einem Hauptstromkreis eines Gleichstromsystems angeordnet ist;
- einen Trennschalter (3) und einen Vakuumschutzschalter (4), die parallel zu dem Halbleiterschalter (2) geschaltet sind; und
- eine Zwangskommutierungsschaltung (5), die parallel zu dem Vakuumschutzschalter geschaltet ist, wobei der Vakuumschutzschalter (4) ein Vakuumschutzschalter (4) nach einem der Ansprüche 1 bis 4 ist.

**Revendications**

**1.** Coupe-circuit à vide (4) comprenant :

- une vanne à vide (21) ;
- un conducteur côté stationnaire (15) connecté électriquement à une électrode côté stationnaire (25) de la vanne à vide (21) et un conducteur côté mobile (16) connecté électriquement à une électrode côté mobile (26) de la vanne à vide (21) ;
- un bouclier parmi un bouclier parmi un bouclier côté stationnaire (22a) connecté électriquement au conducteur côté stationnaire (15) et un bouclier côté mobile (22b) connecté électriquement au conducteur côté mobile (16) ;
- une enceinte étanchée (11) contenant la vanne à vide (21), le conducteur côté stationnaire (15), le conducteur côté mobile (16), et l'un du bouclier côté stationnaire (22a) et du bouclier côté mobile (22b), et hermétiquement étanchée avec un gaz isolant rempli à l'intérieur de celle-ci ; et
- des conducteurs de circuit principal (17, 18), dont un est connecté électriquement au conducteur côté stationnaire (15) et dont un autre est connecté électriquement au conducteur côté mobile (16), et menés vers l'extérieur de l'enceinte étanchée (11),
le coupe-circuit à vide (4) étant **caractérisé en ce que** :

- le bouclier côté stationnaire (22a) couvre une partie du conducteur côté mobile (16) ; ou
- le bouclier côté mobile (22b) couvre une partie du conducteur côté stationnaire (15).

2. Coupe-circuit à vide (4) selon la revendication 1, dans lequel le bouclier côté stationnaire (22a) et le bouclier côté mobile (22b) ont une structure cylindrique coaxiale avec la vanne à vide (21).

3. Coupe-circuit à vide (4) selon la revendication 2, dans lequel une forme de section transversale d'une portion d'extrémité du bouclier côté stationnaire (22a) et du bouclier côté mobile (22b) a une forme avec un rayon de courbure égale ou supérieure à une moitié d'une épaisseur d'une portion principale correspondante du bouclier latéral stationnaire (22a) et du bouclier latéral mobile (22b).

4. Coupe-circuit à vide (4) selon l'une quelconque des revendications 1 à 3, dans lequel une surface extérieure du bouclier côté stationnaire (22a) et du bouclier côté mobile (22b) est recouverte avec un revêtement isolant (29).

5. Coupe-circuit à courant continu (4) comprenant :

- un commutateur semi-conducteur (2) prévu dans un circuit principal d'un système à courant continu ;
- un sectionneur (3) et un coupe-circuit à vide (4) connectés en parallèle au commutateur semi-conducteur (2) ; et
- un circuit de commutation forcée (5) connecté en parallèle au coupe-circuit à vide, le coupe-circuit à vide (4) étant le coupe-circuit à vide selon l'une quelconque des revendications 1 à 4.

## Fig. 1

## Fig. 2

Fig. 3

Fig. 4

Fig. 5

Fig. 6

## Fig. 7

## Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001357761 A
- JP 2009129855 A
- JP 2010178526 A
- US 2013213937 A1
- EP 2573887 A1
- US 2012160810 A1
- JP S62252024 A
- WO 2013127462 A1